# EUROPEAN PATENT APPLICATION

(11) **EP 3 975 086 A2**
(43) Date of publication of application: **30.03.2022**
(21) Application number: 22275007.7
(22) Date of filing: 18.01.2022
(51) Int. Cl.: G06Q 10/06, G09B 7/04

(54) **METHOD AND APPARATUS FOR INTELLIGENTLY SCHEDULING TEACHING IN A DRIVING SCHOOL, ELECTRONIC DEVICE, STORAGE MEDIUM, AND PROGRAM PRODUCT**

(30) Priority: 18.06.2021 CN 202110680849
(71) Applicant: Apollo Intelligent Driving Technology (Beijing) Co., Ltd., Haidian District Beijing 100085 (CN)
(72) Inventor: XING, Liang, Beijing, 100085 (CN); SONG, Shuqing, Beijing, 100085 (CN); WU, Yi, Beijing, 100085 (CN); YANG, Wentao, Beijing, 100085 (CN); ZHAO, Shuaishuai, Beijing, 100085 (CN); LUO, Qionghua, Beijing, 100085 (CN); WANG, Lifeng, Beijing, 100085 (CN); FENG, Yunchan, Beijing, 100085 (CN); WANG, Tao, Beijing, 100085 (CN); CAO, Xiaochen, Beijing, 100085 (CN); WU, Fuchuang, Beijing, 100085 (CN)
(74) Representative: Wilson Gunn

(57) **Abstract**

A method and apparatus for intelligently scheduling teaching of a driving school, an electronic device, a storage medium, and a computer program product, relate to the technical field of computers, and in particular to the technical field of intelligent scheduling. The method includes: receiving a reservation request initiated by a student of the driving school; determining a status of a training resource reserved by the reservation request; searching for a training resource in an idle status, in a case where the reserved training resource is in a non-idle status; and adjusting the reserved training resource to a training resource in the idle status. The technical solutions of the present disclosure can realize the intelligent scheduling of teaching of the driving school, thereby reducing the occurrence of reservation conflicts, avoiding the unbalanced allocation of training resources of the driving school and optimizing the scheduling of the training resources.

## Description

### TECHNICAL FIELD

The present disclosure relates to the technical field of computers, and in particular to the technical field of intelligent scheduling.

### BACKGROUND

Existing systems for scheduling teaching of a driving school usually allocate training grounds by way of making reservations by students. For example, a student selects a suitable training ground according to the distance and makes a reservation. In a case where the training ground is idle, the reservation will succeed, otherwise the reservation will fail.

However, due to the large randomness of students' reservations, reservation conflicts often occur. In a case where a plurality of students make a reservation for the same training ground, once a certain student makes a reservation successfully, the other students will fail to make a reservation. Moreover, there will also be situations where a part of training grounds have not been reserved for a long time and have been in an idle status all the time, resulting in unbalanced resource scheduling.

### SUMMARY

The present disclosure discloses a method and apparatus for intelligently scheduling teaching of a driving school, an electronic device, a storage medium and a computer program product.

According to one aspect of the present disclosure, there is provided a method for intelligently scheduling teaching of a driving school, including:
receiving a reservation request initiated by a student of the driving school;
determining a status of a training resource reserved by the reservation request;
searching for a training resource in an idle status, in a case where the reserved training resource is in a non-idle status; and
adjusting the reserved training resource to a training resource in the idle status.

According to another aspect of the present disclosure, there is provided an apparatus for intelligently scheduling teaching of a driving school, including:
a reception module, configured for receiving a reservation request initiated by a student of the driving school;
a determination module, configured for determining a status of a training resource reserved by the reservation request;
a search module, configured for searching for a training resource in an idle status, in a case where the reserved training resource is in a non-idle status; and
a resource scheduling module, configured for adjusting the reserved training resource to a training resource in the idle status.

According to another aspect of the present disclosure, there is provided an electronic device, including:
at least one processor; and
a memory communicatively connected with the at least one processor, wherein
the memory stores instructions executable by the at least one processor; the instructions, when executed by the at least one processor, enable the at least one processor to perform the method in any one of the embodiments of the present disclosure.

According to another aspect of the present disclosure, there is provided a non-transitory computer-readable storage medium storing computer instructions; wherein the computer instructions, when executed by a computer, enabling the computer to perform the method in any one of the embodiments of the present disclosure.

According to another aspect of the present disclosure, there is provided a computer program product including a computer program; wherein the computer program, when executed by a processor, implements the method in any one of the embodiments of the present disclosure.

The technical solutions of the embodiments of the present disclosure can realize the intelligent scheduling of teaching of the driving school, thereby reducing the occurrence of reservation conflicts, avoiding the unbalanced allocation of training resources of the driving school and optimizing the scheduling of the training resources.

It should be understood that the content described in this section is neither intended to identify the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the solution and do not constitute a limitation to the present disclosure. In the drawings:
FIG. 1 is a schematic diagram of a method for intelligently scheduling teaching of a driving school according to an embodiment of the present disclosure;
FIG. 2 is a schematic diagram of searching for the training resource in the idle status according to an embodiment of the present disclosure;
FIG. 3 is a schematic diagram of adjusting the follow-up courses according to an embodiment of the present disclosure;
FIG. 4 is a block diagram of an apparatus for intelligently scheduling teaching of a driving school according to an embodiment of the present disclosure;
FIG. 5 is a block diagram of an apparatus for intelligently scheduling teaching of a driving school according to an embodiment of the present disclosure; and
FIG. 6 is a block diagram of an electronic device used to implement the method for intelligently scheduling teaching of a driving school according to the embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

The technical solution of the embodiment of the present disclosure is applied to a scheduling scene of the teaching of the driving school, can adjust the training resources reserved by the students, can also dynamically match the students after the start of training on the current day, can adjust the follow-up courses on the current day, and can realize the intelligent scheduling of the teaching of the driving school, which not only reduces the occurrence of reservation conflicts, but also avoids the unbalanced allocation of training resources of the driving school and optimizes the scheduling of the training resources.

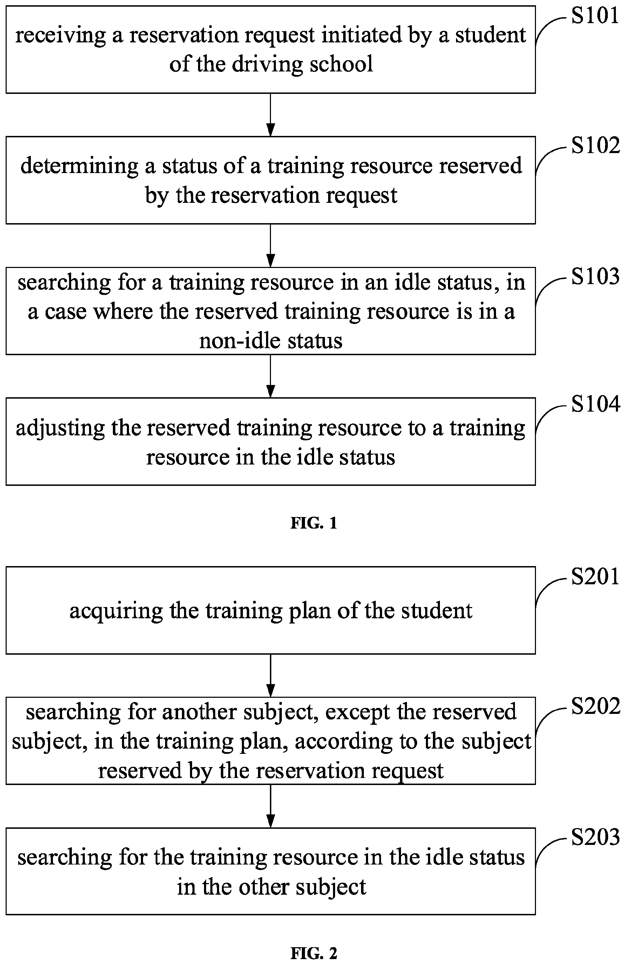

FIG. 1 is a schematic diagram of a method for intelligently scheduling teaching of a driving school in an embodiment of the present disclosure. As shown in FIG. 1, the method includes:
S101: receiving a reservation request initiated by a student of the driving school;
S102: determining a status of a training resource reserved by the reservation request;
S103: searching for a training resource in an idle status, in a case where the reserved training resource is in a non-idle status; and
S104: adjusting the reserved training resource to a training resource in the idle status.

In the embodiment of the present disclosure, the reservation request may include information related to the reservation, including but not limited to: time, subjects or training resources, etc. The status of training resources include an idle status and a non-idle status Training resources in the idle status can be reserved, while training resources in the non-idle status cannot be reserved.

The above-mentioned method provided by the embodiment of the present disclosure can realize the intelligent scheduling of teaching of the driving school, thereby reducing the occurrence of reservation conflicts, avoiding the unbalanced allocation of training resources of the driving school and optimizing the scheduling of the training resources.

In an implementation, the searching for the training resource in the idle status in S103 includes:
searching for the training resource in the idle status, according to a subject reserved by the reservation request and a training plan of the student.

This method of searching based on reserved subjects and students' training plans makes the search results more accurate, which in turn improves the accuracy of resource adjustments and enhances the user experience.

FIG. 2 is a schematic diagram of searching for the training resource in the idle status in an embodiment of the present disclosure. As shown in FIG. 2, in an implementation, searching for the training resource in the idle status, according to a subject reserved by the reservation request and a training plan of the student, includes:
S201: acquiring the training plan of the student.

The training plan of the student usually is information on training courses for the student learning the driving. Through the training plan, courses, time, training grounds, coaches, and other information of various subjects that the student needs to learn in the future can be clearly known.
S202: searching for another subject, except the reserved subject, in the training plan, according to the subject reserved by the reservation request.
S203: searching for the training resource in the idle status in the other subject.

For example, in the case where the subject reserved by the reservation request is the reverse stall parking subject, and another subject searched for is the parallel parking subject, one can search for training resources in idle status in the parallel parking subject.

In the embodiment of the present disclosure, the reservation condition of training resources of the driving school can be recorded in real time, the unreserved training resources can be marked as the idle status, and the reserved training resources can be marked as the non-idle status. At the time of scheduling resources, the corresponding scheduling can be carried out according to whether the training resources are in the idle status or in the non-idle status.

The above-mentioned manner of searching for the training resource in the idle status in the other subject according to the reservation request can schedule training resources between different subjects, which is simple and flexible, is easy to be implemented, and optimizes the scheduling of the training resources.

In an implementation, the above method further includes:
adjusting a follow-up course of a student, who meets a scheduling rule, on a current day, according to training results of a plurality of students trained on the current day.

The training result refers to whether the training meets a specified requirement. The training result can characterize the quality of a student's training, and can specifically be evaluated according to a preset evaluation criterion. The training result can be set to a plurality of levels as required, including but not limited to: unqualified, qualified and excellent, etc., which are not specifically limited. The follow-up courses on the current day are specific to the scene where a student learns a plurality of courses in a day. Besides the course in which the student is currently training, there are follow-up courses at other times of the day. For example, a certain student reserved two class hours in the forenoon, namely, the reverse stall parking course and the parallel parking course respectively. After starting the reverse stall parking training, the follow-up parallel parking course can be adjusted according to the training result of the student.

The above-mentioned manner of adjusting the follow-up courses on the current day realizes the intelligent adjustment of the training courses of the driving school and expands the dimension of scheduling, which can not only schedule training resources, but also schedule training courses, thereby enriching the scheduling means and further optimizing the scheduling of teaching of the driving school

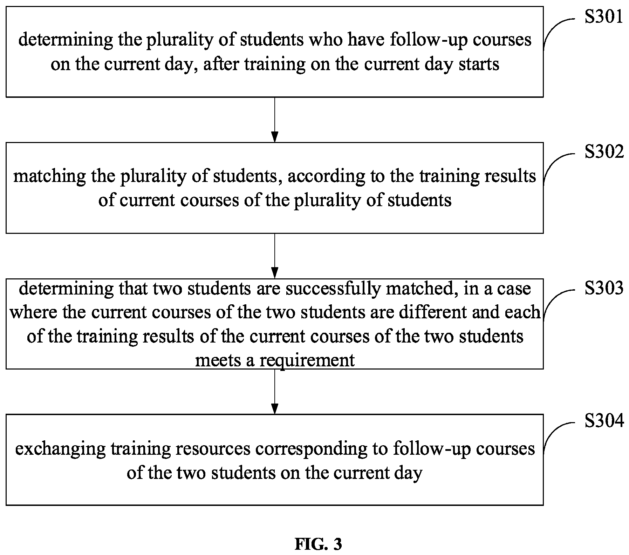

FIG. 3 is a schematic diagram of adjusting the follow-up courses in an embodiment of the present disclosure. As shown in FIG. 3, in an implementation, adjusting the follow-up course of the student, who meets the scheduling rule, on the current day, according to the training results of the plurality of students trained on the current day, including:
S301: determining the plurality of students who have follow-up courses on the current day, after training on the current day starts.

Illustratively, "there being follow-up courses on the current day" may include various situations, such as "there being training courses in the forenoon and afternoon, respectively", or "there being training courses in two periods of time in the forenoon, respectively", etc.
S302: matching the plurality of students, according to the training results of current courses of the plurality of students.
S303: determining that two students are successfully matched, in a case where the current courses of the two students are different and each of the training results of the current courses of the two students meets a requirement.

Illustratively, determining that a training result meets the requirement can be achieved in a variety of ways, such as, the training result is compared with a preset criterion, in a case where the preset criterion are achieved, it is determined that the training result meets the requirement, and in a case where the preset criterion are not achieved, it is determined that the training result does not meet the requirement, etc.

In the embodiment of the present disclosure, the students successfully matched are regarded as proficient in their current training courses, such that their follow-up training courses can be scheduled, that is, the students do not need to be trained in the follow-up courses, and can be trained in other courses instead.

S304: exchanging training resources corresponding to follow-up courses of the two students on the current day.

For example, a student A reserved for the reverse stall parking, a student B reserved for the parallel parking, and their courses both include forenoon and afternoon courses. After training in the forenoon starts, both the student A and the student B are very skilled and meet the requirements of their respective courses. Therefore, they are successfully matched, and their afternoon training courses can be exchanged. That is, the student A does not need to carry out the training of the reverse stall parking in the afternoon, and can carry out the training of the parallel parking instead. The student B does not need to carry out the training of the parallel parking in the afternoon, and can carry out the training of the reverse stall parking instead.

The above-mentioned manner of exchanging follow-up training courses for the students successfully matched realizes the dynamic adjustment of resources, optimizes resources to a greater extent, and achieves a win-win resource optimization effect.

The training resources in the embodiment of the present disclosure can include at least one of training grounds, training vehicles and coaches. During the scheduling, one of the training resources can be scheduled, or a plurality of training resources can be scheduled simultaneously, which provides a variety of possible implementations for resource scheduling, avoids the unbalanced allocation of the training resources of the driving school, and realizes the wider application of intelligent scheduling.

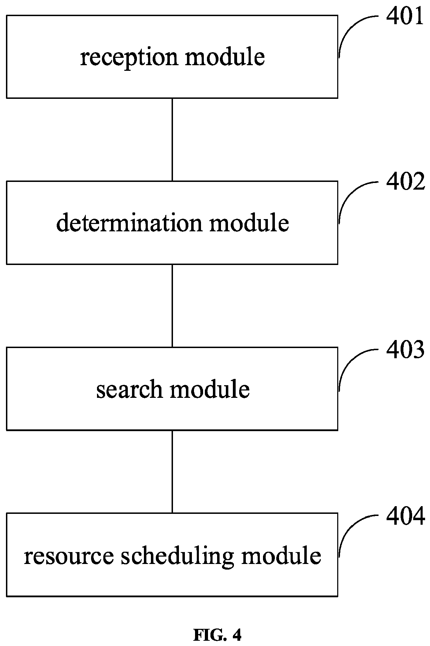

FIG. 4 is a block diagram of an apparatus for intelligently scheduling teaching of a driving school according to an embodiment of the present disclosure. As shown in FIG. 4, the apparatus includes:
a reception module 401, configured for receiving a reservation request initiated by a student of the driving school;
a determination module 402, configured for determining a status of a training resource reserved by the reservation request;
a search module 403, configured for searching for a training resource in an idle status, in a case where the reserved training resource is in a non-idle status; and
a resource scheduling module 404, configured for adjusting the reserved training resource to a training resource in the idle status.

In an implementation, the search module includes:
a search unit, configured for searching for the training resource in the idle status, according to a subject reserved by the reservation request and a training plan of the student, in the case where the reserved training resource is in the non-idle status.

In an implementation, the search unit is specifically configured for:
acquiring the training plan of the student;
searching for another subject, except the reserved subject, in the training plan, according to the subject reserved by the reservation request; and
searching for the training resource in the idle status in the other subject.

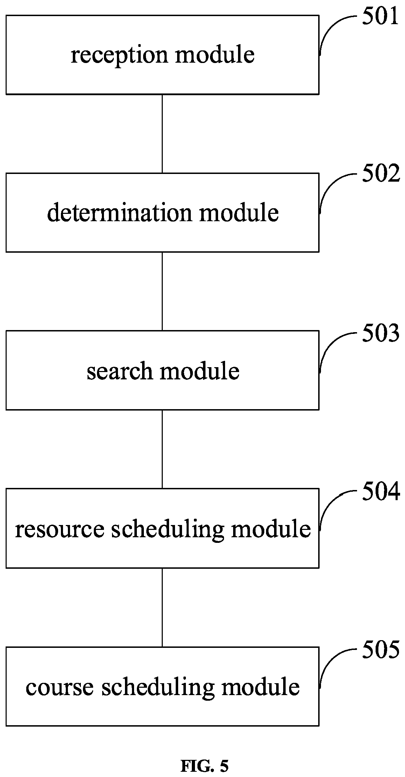

FIG. 5 is a block diagram of an apparatus for intelligently scheduling teaching of a driving school according to an embodiment of the present disclosure. As shown in FIG. 5, the apparatus includes a reception module 501, a determination module 502, a search module 503, a resource scheduling module 504 and a course scheduling module 505.

The reception module 501, the determination module 502, the search module 503, and the resource scheduling module 504 have functions same as functions of the reception module 401, the determination module 402, the search module 403, and the resource scheduling module 404 in the above embodiments, respectively, and will not be described in detail herein.

In an implementation, the course scheduling module 505 is configured for adjusting a follow-up course of a student, who meets a scheduling rule, on a current day, according to training results of a plurality of students trained on the current day.

In an implementation, the course scheduling module 505 is specifically configured for:
determining the plurality of students who have follow-up courses on the current day, after training on the current day starts;
matching the plurality of students, according to the training results of current courses of the plurality of students;
determining that two students are successfully matched, in a case where the current courses of the two students are different and each of the training results of the current courses of the two students meets a requirement; and
exchanging training resources corresponding to follow-up courses of the two students on the current day.

In an implementation, the above-mentioned training resources include at least one of a training ground, a training vehicle, or a coach.

The above-mentioned apparatus provided by the embodiment of the present disclosure can realize the intelligent scheduling of teaching of the driving school, thereby reducing the occurrence of reservation conflicts, avoiding the unbalanced allocation of training resources of the driving school and optimizing the scheduling of the training resources.

In the technical solution of the present disclosure, the involved acquisition, storage, application, etc., of the user's personal information are in accordance with the provisions of relevant laws and regulations, and do not violate public order and good customs.

According to an embodiment of the present disclosure, the present disclosure also provides an electronic device, a readable storage medium and a computer program product.

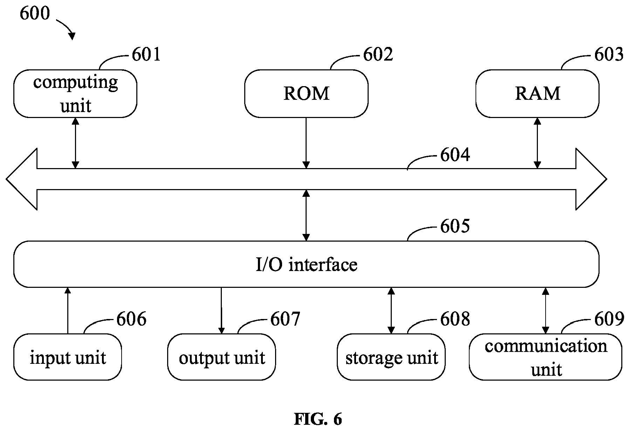

FIG. 6 shows a schematic block diagram of an example electronic device 600 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device can also represent various forms of mobile devices, such as a personal digital assistant, a cellular telephone, a smart phone, a wearable device, and other similar computing apparatuses. The components shown herein, their connections and relationships, and their functions are by way of example only and are not intended to limit the implementations of the present disclosure described and/or claimed herein.

As shown in FIG. 6, the electronic device 600 includes a computing unit 601 that may perform various suitable actions and processes in accordance with computer programs stored in a read only memory (ROM) 602 or computer programs loaded from a storage unit 608 into a random access memory (RAM) 603. In the RAM 603, various programs and data required for the operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the electronic device 600 to exchange information/data with other devices over a computer network, such as the Internet, and/or various telecommunications networks.

The computing unit 601 may be various general purpose and/or special purpose processing assemblies having processing and computing capabilities. Some examples of the computing unit 601 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 601 performs various methods and processes described above, such as the method for intelligently scheduling teaching of a driving school. For example, in some embodiments, the method for intelligently scheduling teaching of a driving school may be implemented as computer software programs that are physically contained in a machine-readable medium, such as the storage unit 608. In some embodiments, some or all of the computer programs may be loaded into and/or installed on the electronic device 600 via the ROM 602 and/or the communication unit 609. In a case where the computer programs are loaded into the RAM 603 and executed by the computing unit 601, one or more of steps of the above-described method for intelligently scheduling teaching of a driving school may be performed. Alternatively, in other embodiments, the computing unit 601 may be configured to perform the method for intelligently scheduling teaching of a driving school in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form (including an acoustic input, a voice input or a tactile input).

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with implementations of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, may also be a server of a distributed system, or a server incorporating a blockchain.

It should be understood that the steps can be reordered, added or deleted by using the various flows illustrated above. For example, the steps described in the present disclosure maybe performed concurrently, sequentially or in a different order, so long as the desired results of the technical solutions provided in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A method for intelligently scheduling teaching of a driving school, comprising:
receiving (S101) a reservation request initiated by a student of the driving school;
determining (S102) a status of a training resource reserved by the reservation request;
searching (S103) for a training resource in an idle status, in a case where the reserved training resource is in a non-idle status; and
adjusting (S104) the reserved training resource to a training resource in the idle status.

2. The method of claim 1, wherein the searching (S103) for the training resource in the idle status comprises:
searching for the training resource in the idle status, according to a subject reserved by the reservation request and a training plan of the student.

3. The method of claim 2, wherein the searching for the training resource in the idle status, according to the subject reserved by the reservation request and the training plan of the student, comprises:
acquiring (S201) the training plan of the student;
searching (S202) for another subject, except the reserved subject, in the training plan, according to the subject reserved by the reservation request; and
searching (S203) for the training resource in the idle status in the other subject.

4. The method of any one of claims 1 to 3, further comprising:
adjusting a follow-up course of a student, who meets a scheduling rule, on a current day, according to training results of a plurality of students trained on the current day.

5. The method of claim 4, wherein the adjusting the follow-up course of the student, who meets the scheduling rule, on the current day, according to the training results of the plurality of students trained on the current day, comprises:
determining (S301) the plurality of students who have follow-up courses on the current day, after training on the current day starts;
matching (S302) the plurality of students, according to the training results of current courses of the plurality of students;
determining (S303) that two students are successfully matched, in a case where the current courses of the two students are different and each of the training results of the current courses of the two students meets a requirement; and
exchanging (S304) training resources corresponding to follow-up courses of the two students on the current day.

6. The method of any one of claims 1 to 5, wherein the training resource comprises at least one of a training ground, a training vehicle, or a coach.

7. An apparatus for intelligently scheduling teaching of a driving school, comprising:
a reception module (401, 501), configured for receiving a reservation request initiated by a student of the driving school;
a determination module (402, 502), configured for determining a status of a training resource reserved by the reservation request;
a search module (403, 503), configured for searching for a training resource in an idle status, in a case where the reserved training resource is in a non-idle status; and
a resource scheduling module (404, 504), configured for adjusting the reserved training resource to a training resource in the idle status.

8. The apparatus of claim 7, wherein the search module (403, 503) comprises:
a search unit, configured for searching for the training resource in the idle status, according to a subject reserved by the reservation request and a training plan of the student, in the case where the reserved training resource is in the non-idle status.

9. The apparatus of claim 8, wherein the search unit is specifically configured for:
acquiring the training plan of the student;
searching for another subject, except the reserved subject, in the training plan, according to the subject reserved by the reservation request; and
searching for the training resource in the idle status in the other subject.

10. The apparatus of any one of claims 7 to 9, further comprising:
a course scheduling module (505), configured for adjusting a follow-up course of a student, who meets a scheduling rule, on a current day, according to training results of a plurality of students trained on the current day.

11. The apparatus of claim 10, wherein the course scheduling module (505) is specifically configured for:
determining the plurality of students who have follow-up courses on the current day, after training on the current day starts;
matching the plurality of students, according to the training results of current courses of the plurality of students;
determining that two students are successfully matched, in a case where the current courses of the two students are different and each of the training results of the current courses of the two students meets a requirement; and
exchanging training resources corresponding to follow-up courses of the two students on the current day.

12. The apparatus of any one of claims 7 to 11, wherein the training resource comprises at least one of a training ground, a training vehicle, or a coach.

13. An electronic device, comprising:
at least one processor; and
a memory communicatively connected with the at least one processor, wherein
the memory stores instructions executable by the at least one processor; the instructions, when executed by the at least one processor, enable the at least one processor to perform the method of any one of claims 1 to 6.

14. A non-transitory computer-readable storage medium storing computer instructions; wherein the computer instructions, when executed by a computer, enable the computer to perform the method of any one of claims 1 to 6.

15. A computer program product comprising a computer program; wherein the computer program, when executed by a processor, implements the method of any one of claims 1 to 6.
